# EUROPEAN PATENT APPLICATION

(11) **EP 4 563 337 A1**
(43) Date of publication of application: **04.06.2025**
(21) Application number: 23315442.6
(22) Date of filing: 28.11.2023
(51) Int. Cl.: B29D 11/00, B24B 13/00, B24B 55/12

(54) **PLASTIC WASTE COLLECTION APPARATUS, RELATED MANUFACTURING STATION OPHTHALMIC ARTICLES AND RELATED METHOD**

(71) Applicant: Essilor International, 94220 Charenton-Le-Pont (FR)
(72) Inventor: Ho, Caroline, 94000 CRETEIL (FR); Guillon, Fabrice, 94520 MADRES LES ROSES (FR); Pinault, Sebastien, 91700 VILLIERS SUR ORGE (FR)
(74) Representative: Innovincia

(57) **Abstract**

The invention relates to a plastic waste collection apparatus (15) configured to cooperate with a lens manufacturing station (1), the lens manufacturing station (1) being configured to shape a lens (3) by mechanical material removal like machining, grinding and/or trimming, and comprises an interface (9) to receive data information relative to a lens manufacturing job related to lenses to be shaped by the lens (3) manufacturing station (1), said data information comprising for each lens (3) manufacturing job at least a material type parameter of a lens to be shaped, the plastic waste collection apparatus (15) comprising
- at least a first collection area (17A) for collecting plastic waste according to a first material type parameter,
- at least a second collection area (17B) for collecting plastic waste according to a second material type parameter,
- a dispatching unit (31) configured to receive said material type parameter for each lens manufacturing job and to dispatch the waste generated towards the first or the second collection area (17A, 17B) depending on the received material type parameter.

## Description

### FIELD OF THE INVENTION

The invention relates generally to a waste collection apparatus specifically in the domain of manufacturing of ophthalmic articles, a related manufacturing station and a related method.

### BACKGROUND AND PRIOR ART

The term "ophthalmic article" is specifically understood to mean a lens, corrective or otherwise, that can be used as spectacle glass, for spectacles for example, particularly sunglasses, goggles, visors or the like.

To a very large majority, these ophthalmic articles comprise a substrate made of a plastic material.

The plastic material used for manufacturing an ophthalmic lens depends on the lens manufacturer but may also depends on the specific features of the ophthalmic article which has to be manufactured. Various types of plastic material are nowadays used in lens manufacturing.

Such types of plastic material comprise for example polymers like a thermoplastic plastic material, such as polycarbonates and thermoplastic polyurethanes, in particular made of polyamide (PA), like nylon or a polycarbonate, polyester or TRIVEX^{©} (registered trademark) or thermosetting (cross-linked) materials such as diethylene glycol bis(allylcarbonate) polymers and copolymers (in particular CR-39^{®} from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates (such as PMMA) and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC) and diethylene glycol bis(allylcarbonate) polymers, in particular substrates made of polycarbonate. As an alternative, a PET or TAC film, or any other suitable material, may be present on the substrate, on either of its surface, for example added by lamination.

The manufacturing process in particular machining, grinding and/ or trimming operations necessarily generate important quantities of plastic waste in form of surfacing swarfs.

Today, all the surfacing swarfs are collected and mixed altogether. This makes it difficult to post-process and to recycle and value this collected mixed up plastic waste.

Indeed, as thermoplastics and thermosets behave differently in their chemical nature, collecting them altogether ends in a "plastic mix" difficult to reuse and of little value.

Regarding swarfs sorting, several solutions are available on the market. Sorting is generally performed after all types of swarfs are mixed and therefore requires complex separation methods (optical, thermal, flotation or density for example) which does not allow to reach an acceptable valuable composition and efficiency.

Therefore one object of the present invention is to propose an improved apparatus for plastic waste collection which allows to recycle and better value the generated plastic waste during lens manufacturing.

To this extent, the present invention proposes a plastic waste collection apparatus configured to cooperate with a lens manufacturing station, the lens manufacturing station being configured to shape a lens by mechanical material removal like machining, grinding and/or trimming, and comprises an interface to receive data information relative to a lens manufacturing job related to lenses to be shaped by the lens manufacturing station, said data information comprising for each lens manufacturing job at least a material type parameter of a lens to be shaped, the plastic waste collection apparatus comprising
- at least a first collection area for collecting plastic waste according to a first material type parameter,
- at least a second collection area for collecting plastic waste according to a second material type parameter,
- a dispatching unit configured to receive said material type parameter for each lens manufacturing job and to dispatch the waste generated towards the first or the second collection area depending on the received material type parameter.

The plastic waste collection apparatus may present one or several further aspects taken alone or in combination:
The plastic waste collection apparatus may further comprise
- a main waste evacuation section having one end configured to be connected to a waste output of a job execution space of said lens manufacturing station, and the other end configured to be connected to the dispatching unit,
- at least a first evacuation section having a first end connected to the dispatching unit and a second end outputting towards the first waste collection area,
- at least a second evacuation section having a first end connected to the dispatching unit and a second end outputting towards the second waste collection area.

According to a further aspect, the dispatching unit comprises for example at least one flap controlled to be in at least a first position or a second position, in the first position the generated waste is directed towards the first collection area and prevented to reach the second collection area and in the second position, the generated waste is directed towards the second collection area and prevented to reach the first collection area.

The dispatching unit may comprise for each waste collection area one dedicated associated flap controlled to be in an open position authorizing the generated waste to reach the associated collection area and a closed position preventing the generated waste to reach the associated collection area.

The plastic waste collection apparatus can further comprise at least one suction unit connected to at least one collection area for suction of generated waste towards the collection area(s).

At least one evacuation section may further comprise at least one rinsing sprinkler for cleaning of the evacuation section.

At least one waste collection area can comprise a container having a liquid - solid separator.

The invention also relates to a lens manufacturing station configured to shape a lens by material removal like machining, grinding, polishing and/or trimming, and comprising an interface to exchange data with a job database containing data information related to lenses to be manufactured, said data information comprising for each lens manufacturing job at least a material type parameter of a lens to be shaped, further comprising a plastic waste collection apparatus as defined above.

According to a further aspect, the lens manufacturing station comprises for example a job execution space equipped with tools configured to shape a lens by material removal like machining, grinding, polishing and/or trimming, and further may comprise
- at least a first evacuation section having a first end connected to the dispatching unit and a second end outputting towards the first collection area,
- at least a second evacuation section having a first end connected to the dispatching unit and a second end outputting towards the second collection area, the dispatching unit being between the job execution space and the first respective second evacuation section.

The first and second evacuation sections can be located on an opposite side of the job execution space.

The first waste collection area may be dedicated to receive thermoplastic waste and comprises a waste cleaning and/or drying unit.

According to another aspect the lens manufacturing station further comprises a plastic pellets shaping unit located downstream to the waste cleaning and/ or drying unit.

The dispatching unit can be configured to dispatch a target composition to at least one collection area, said target composition being composed of plastic waste material of a first and a second material type parameter.

The invention also relates to a method for plastic waste collection generated by a lens manufacturing station, the lens manufacturing station being configured to shape a lens by material removal like machining, grinding, polishing and/or trimming, and comprises an interface to exchange data with a job database containing data information related to lenses to be manufactured, said data information comprising for each lens manufacturing job at least a material type parameter of a lens to be shaped, wherein method comprises the following steps :
- reception of a material type parameter of a lens to be shaped,
- dispatching the generated waste depending on the received material type parameter towards a collection area for collecting waste according to said first material type parameter.

According to a further aspect, the method further may comprise a step of controlling at least one flap for dispatching the generated waste.

The method also may further comprise a suction step for dispatching the generated waste.

### BRIEF DESCRIPTIONS OF THE DRAWINGS

Other advantages and characteristics will appear with the reading of the description of the following figures:
- FIG. 1 shows a schematically a lens manufacturing station with a plastic waste collection apparatus according to an embodiment,
- FIG. 2 shows a schematically an outlet pipe with a flap,
- FIG. 3 shows a schematically a lens manufacturing station with a plastic waste collection apparatus according to another embodiment,
- FIG. 4 shows a schematically a dispatching unit with a flap,
- FIG. 5 shows a schematically a part of a plastic waste collection apparatus according to a further embodiment, and
- FIG. 6 shows a schematically a part of a plastic waste collection apparatus according to another further embodiment.

### DETAILED DESCRIPTION OF AN EMBODIMENT

The embodiment(s) in the following description are only to be considered as examples. Although the description may refer to one or several embodiments, this does not mean inevitably that every reference concerns the same embodiment, or that the characteristics apply only to a single embodiment. Simple characteristics of various embodiments can be also combined to new embodiments that are not explicitly described.

In the present description, the terms "upstream" and "downstream" are used according the following meaning: a first processing unit for a certain processing operation is placed upstream with respect to a second unit when the optical element undergoes first the operation in the first processing unit and then another operation in the second unit.

And a first processing unit is placed downstream with respect to a second unit when the optical element undergoes first the operation in the second unit and then another operation in the first unit.

An optical element refers for example to an ophthalmic optical product, a lens blank or a semi-finished lens blank. The optical element may present or not an optical correction and may be used for as spectacle lens, in particular as sunglasses or masks.

The optical element may be formed of one layer or several layers attached to each other and forming a unitary element.

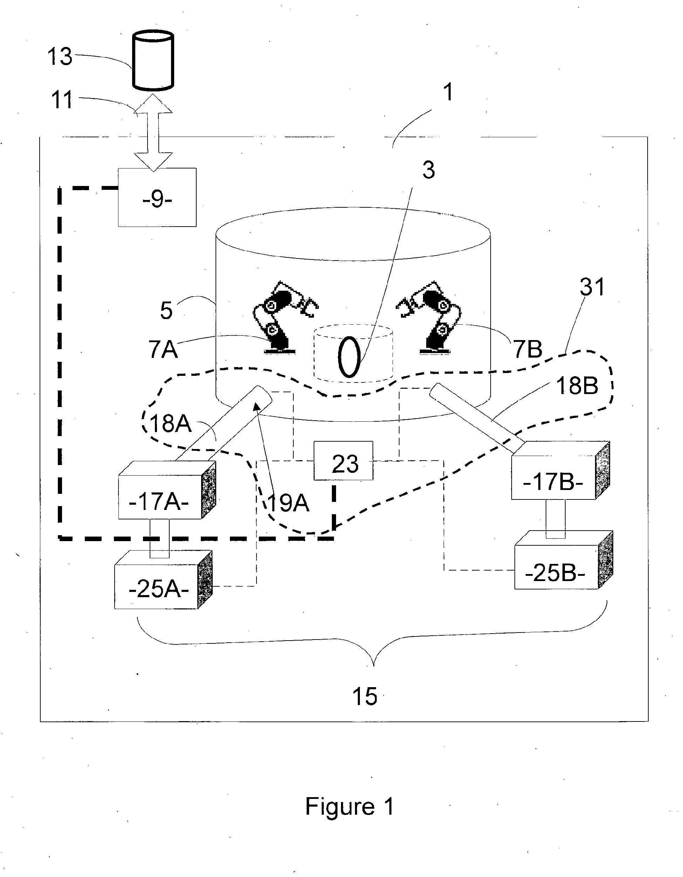

Figure 1 shows schematically a lens manufacturing station 1 which is configured to shape a lens 3 by material removal like machining, grinding, polishing and/or trimming in a job execution space 5 equipped with tools (represented symbolically) for example referenced 7A and 7B, which comprise specific tools to shape a lens 3 by material removal as mentioned above like machining, grinding, polishing and/or trimming.

The lens manufacturing station 1 further comprises an interface 9 configured to exchange data (represented by arrow 11) with a job database 13 containing data information related to lenses 3 to be manufactured, said data information comprising for each lens manufacturing job at least a material type parameter of a lens to be shaped.

The material type parameter of a lens to be shaped can be simply a code or a descriptive character string representing the material type.

For example one code may be "PC" for lenses made of poly-carbonate, "CP" for lenses made of co-polymer like CR-39^{®} or "PA" for poly(meth)acrylates (such as PMMA) etc.

The material type parameter may describe families of plastics which are compatible with respect to each other for valuable recycling like "TP" for thermoplastics and "TS" for thermosets.

Therefore the material type parameter can be defined in dependence of the recycling which is made of collected plastic waste and the precision in composition needed to obtain the most valuable recycling.

As shown in figure 1, the lens manufacturing station 1 further comprises a plastic waste collection apparatus 15.

According to the embodiment shown in figure 1, the plastic waste collection apparatus 15 comprises
- at least a first collection area 17A for collecting plastic waste according to a first material type parameter and
- at least a second collection area 17B for collecting plastic waste according to a second material type parameter.

In other embodiments, more than two collection areas can be foreseen.

The first collection area 17A is connected through an outlet pipe 18A to the job execution space 5 and the second collection area 17B is connected through an outlet pipe 18B to the job execution space 5. In a not shown embodiment, the outlet pipes 18A and 18B are located on opposite side of the job execution space 5,

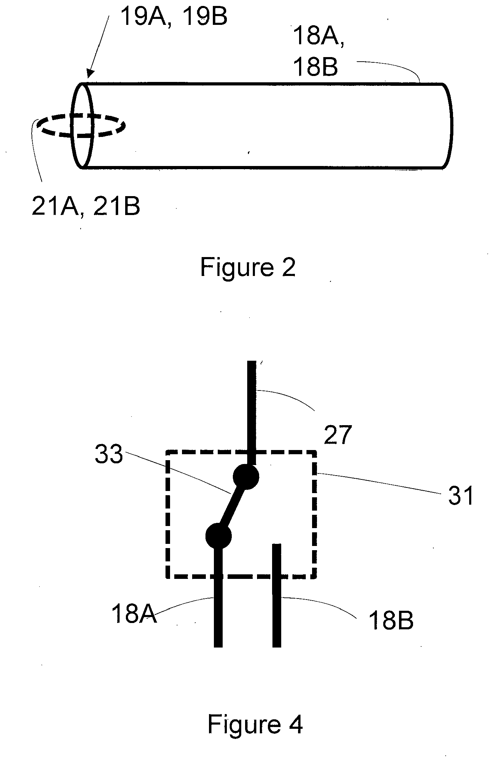

Figure 2 shows an outlet pipe, for example 18A, 18B which presents an end 19A, 19B connected to the job execution space 5 (see also figure 1). The end 19A, 19B comprises a flap 21A, 21B which can be moved through a not shown actuator (one actuator per flap), for example by rotation, between an open position as shown in figure 2 which allows waste to flow to the collection area 17A, 17B and a closed position (not shown) where the waste is prevented to flow to the waste collection area 17A, 17B. Instead of a flap, one might also consider a gate or a door controlled by an actuator. In a not shown alternative such a flap, gate or door may also be integrated for example into the wall delimiting the job execution space 5.

The open / closed position of the flaps 21A, 21B are for example controlled by a control unit 23.

The control unit 23 is configured to control the flaps 21A, 21B in a way that when flap 21A is in an open position, flap 21B is in a closed position such that the generated waste is directed towards the first collection area 17A and prevented to reach the second collection area 17B and vice-versa when flap 21A is in a closed position and flap 21B is in an open position.

The control unit 23 is linked to interface 9 and configured to receive the material type parameter of the lens 3 to be manufactured and to control flaps 21A and 21B accordingly.

Thus, at least outlet pipes 18A, 18B with theirs flaps 21A, 21B and the control unit 23 form a dispatching unit 31 (dashed line) which is configured to receive said material type parameter for each lens manufacturing job and to dispatch the waste generated towards the first or the second collection area 17A, 17B depending on the received material type parameter.

The control unit 23 is for example configured to dispatch a target composition to at least one collection area 17A. Such a target composition may be composed of plastic waste material of only one material type parameter.

According to a variant, such a target composition may be composed of plastic waste material of a first and a second material type parameter in order to get a well defined mix in view of a specific recycling application for example.

As shown in figure 1, the waste collection apparatus 15 further comprises for each of the collection areas 17A, 17B a dedicated suction unit 25A, 25B connected through a pipe to the dedicated collection area 17A or 17B for suction of generated waste towards the collection area(s) 17A, 17B. The suction units 25A and 25B can also be controlled by control unit 23 in a way that a suction unit for example 25A is only activated when the flap 21A of the dedicated outlet pipe 18A is in an open position.

According to a further development, the suction units 25A or 25B are only activated a short time to achieve a flush evacuation of the generated waste towards the collection area(s) 17A, 17B. Such activation can take place for example after completion in the job execution space 5 of one job or of several jobs with the same substrate and generating the same type of waste.

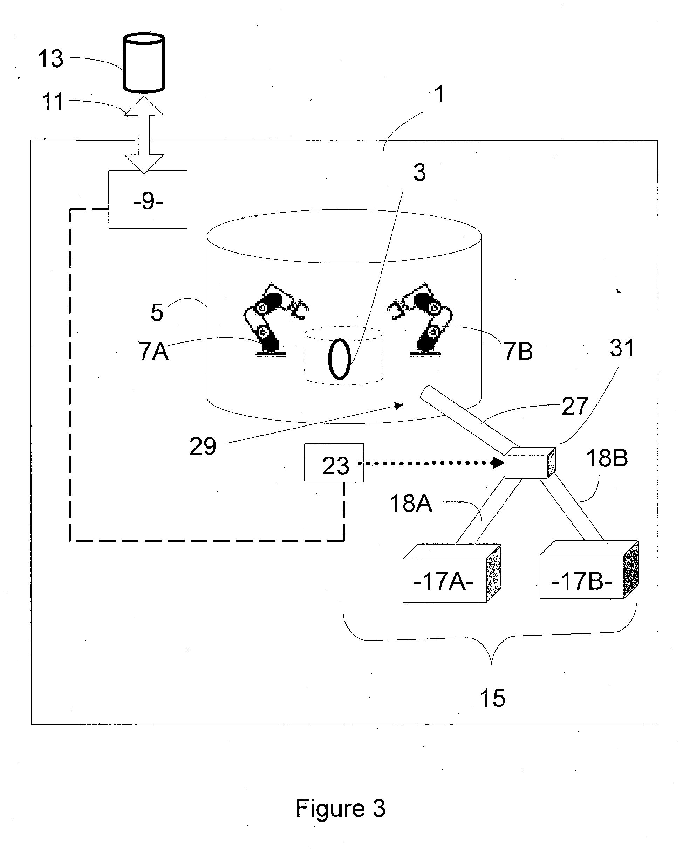

Figure 3 shows another embodiment of a lens manufacturing station 1 with a plastic waste collection unit 15 which differs from the embodiment of figure 1 as follows.

In this embodiment, the plastic waste collection unit 15 comprises a main waste evacuation section 27, for example a pipe or duct, having one end connected to a waste output 29 of said lens manufacturing station, in particular of the job execution space 5. The other end of the main waste evacuation section 27 is connected to the dispatching unit referenced 31 in figure 3.

A first evacuation section formed by outlet pipe 18A has a first end connected to the dispatching unit 31 and a second end outputting towards the first waste collection area 17A. A second evacuation section formed by outlet pipe 18B has a first end connected to the dispatching unit 18 and a second end outputting towards the second waste collection area 17B.

Figure 4 shows schematically dispatching unit 31. In this embodiment, the dispatching unit 31 comprises only one duct 33 controlled to be in at least a first position or a second position. In the first position shown in figure 4, the duct 33 connects the main waste evacuation section 27 to outlet pipe 18A and the generated waste is directed towards the first collection area 17A through outlet pipe 18A and prevented to reach the second collection area 18B. In the second position, the duct 33 connects the main waste evacuation section 27 to outlet pipe 18B and the generated waste is directed towards the second collection area 17B and prevented to reach the first collection area 17A. In a similar way, the duct 33 can be replaced by one flap, a door or gate directing the plastic waste either to outlet pipe 18A or to outlet pipe 18B.

Several developments may be applied to the embodiments as described above.

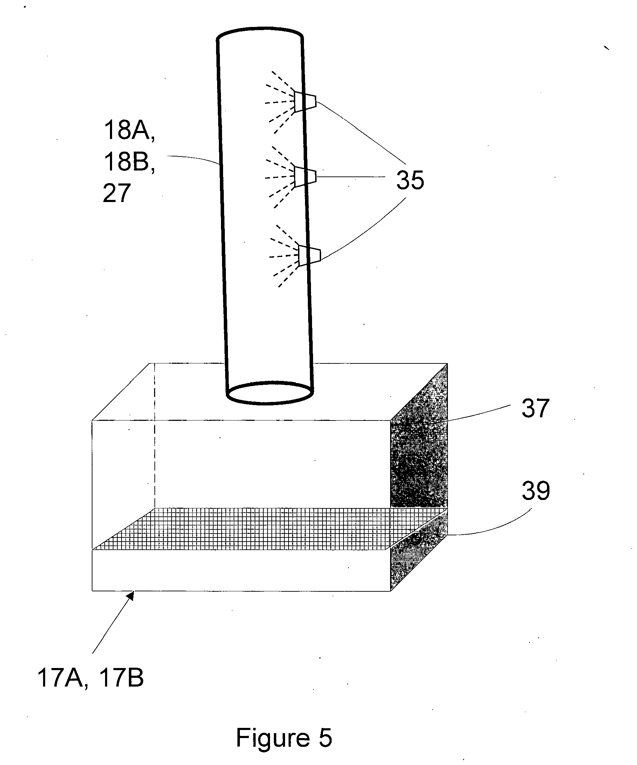

In figure 5 is shown an example where an evacuation section 18A, 18B or main evacuation section 27 further comprises one or several rinsing sprinklers 35 for cleaning of the evacuation section 18A, 18B. This may be in particular interesting for the main evacuation section 27 when the material type of two successive job changes, or for evacuations sections 18A, 18B from time to time in order to prevent plastic particles to adhere to the wall of the pipes. In a not shown alternative, the rinsing sprinklers 35 may also be integrated into the job execution space 5.

According to a further development, in particular when the evacuation section 18A, 18B is equipped with rinsing sprinklers 35, the waste collection area 17A, 17B comprises a container 37 having a liquid - solid separator 39 for example comprising a sieve, grid or a mesh retaining the collected plastic waste and letting flow the liquid to the bottom part of the container 37. Such a liquid - solid separator 39 is also interesting for separating the collected plastic waste from the cooling liquid used during the material removal operations.

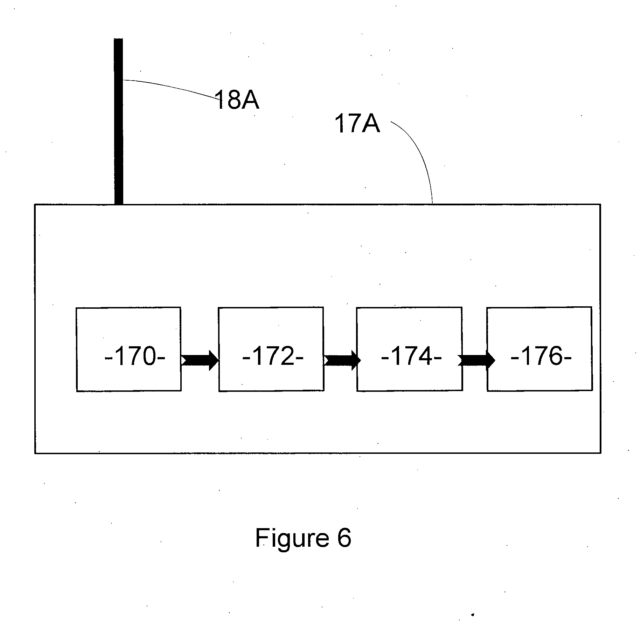

In figure 6 is represented schematically an embodiment of a waste collection area 17A which can be dedicated to receive for example thermoplastic waste. In this embodiment, the waste collection area 17A comprises for example a reception area 170, a waste cleaning unit 172, a drying unit 174 and a plastic pellets shaping unit 176 like a briquetter, which is located downstream to the waste cleaning 172 and/ or drying unit 174. Dependent on how to value the collected plastic waste, the waste cleaning unit 172, the drying unit 174 and the plastic pellets shaping unit 176 are optional. In a variant, the drying unit may be part of the plastic pellets shaping unit. Cleaning may be necessary for example in order to remove the liquid coolant used for example during machining or grinding from the plastic particle waste or to remove impurities like hard coating material.

The arrows in figure 6 indicate that the plastic waste is first collected in the reception area 170, then transferred to the waste cleaning unit 172 for cleaning for example with hot water containing a solvent or not, then transferred to the drying unit 174 for drying and finally transferred to the plastic pellets shaping unit 176 for shaping the plastic waste into plastic pellets which can directly be used.

The functioning of the embodiments of figures 1 and 3 is quite similar can be described as follows.

The material type parameter of a lens to be shaped is received by the interface 9 and sent to the control unit 23 which controls the dispatching unit 31, in particular a duct, flap, door or gate. Depending on the received material type parameter, the generated plastic waste is dispatched towards for example collection area 17A for collecting waste according to said first material type parameter. According to the embodiment of figure 1, when the flap 21A is in an open position, suction unit 25A is activated too which allows to suck the generated plastic waste more efficiently in the waste collection area 17A. Form the description above, it is also understood that features described in relationship to one embodiment may be combined with features disclosed in relationship with another embodiment.

For example, the suction unit 25A and 25B may be combined with the embodiments of figures 3, 5 and 6. Or the different units 170, 172, 174 and 176 described in relationship with figure 6 may be combined individually or in combination of at least two units in the embodiments described in relationship with figures 1, 3 or 5.

Furthermore, the plastic waste collection apparatus 15 can be integrated in a lens manufacturing station 1 or be conceived as an add-on option which can be added to already existing lens manufacturing stations 1.

One understands that thanks to the features of the above described plastic waste collection apparatus 15, plastic waste may be more efficiently recycled and the obtained collected plastic waste may be more rewarded.

In addition, the extra step of swarf separation is not needed as the mixing is avoided or the mixture composition is obtained as defined and controlled by the control unit. Contamination from other substrates can be decreased, especially if a quick cleaning or rinsing step is added when the substrate changes. Adding on a pellets shaping unit 176 like a briquetter equipment allows reducing swarf volume and can provide considerable savings on transport and storage costs, while enhancing production flow..

## Claims

1. Plastic waste collection apparatus (15) configured to cooperate with a lens manufacturing station (1), the lens manufacturing station (1) being configured to shape a lens (3) by mechanical material removal like machining, grinding and/or trimming, and comprises an interface (9) to receive data information relative to a lens manufacturing job related to lenses to be shaped by the lens (3) manufacturing station (1), said data information comprising for each lens (3) manufacturing job at least a material type parameter of a lens to be shaped, the plastic waste collection apparatus (15) comprising
- at least a first collection area (17A) for collecting plastic waste according to a first material type parameter,
- at least a second collection area (17B) for collecting plastic waste according to a second material type parameter,
- a dispatching unit (31) configured to receive said material type parameter for each lens manufacturing job and to dispatch the waste generated towards the first or the second collection area (17A, 17B) depending on the received material type parameter.

2. Plastic waste collection apparatus according to claim 1, further comprising
- a main waste evacuation section (27) having one end configured to be connected to a waste output of a job execution space (5) of said lens manufacturing station (1), and the other end configured to be connected to the dispatching unit,
- at least a first evacuation section (17A) having a first end connected to the dispatching unit (31) and a second end outputting towards the first waste collection area (17A),
- at least a second evacuation section (18B) having a first end connected to the dispatching unit (31) and a second end outputting towards the second waste collection area (18B).

3. Plastic waste collection apparatus according to claim 1 or 2, where the dispatching unit (31) comprises at least one flap (21, 21B) controlled to be in at least a first position or a second position, in the first position the generated waste is directed towards the first collection area (17A) and prevented to reach the second collection area (17B) and in the second position, the generated waste is directed towards the second collection area (17B) and prevented to reach the first collection area (17A).

4. Plastic waste collection apparatus according to any of claims 1 to 3, where the dispatching unit (31) comprises for each waste collection area (17A, 17B) one dedicated associated flap (21A, 21B) controlled to be in an open position authorizing the generated waste to reach the associated collection area (17A, 17B) and a closed position preventing the generated waste to reach the associated collection area (17A, 17B).

5. Plastic waste collection apparatus according to any of claims 1 to 4, further comprising at least one suction unit (25A, 25B) connected to at least one collection area (17A, 17B) for suction of
. generated waste towards the collection area(s) (17A, 17B).

6. Plastic waste collection apparatus according to any of claims 1 to 5, wherein at least one evacuation section (18A, 18B, 27) further comprises at least one rinsing sprinkler (35) for cleaning of the evacuation section (18A, 18B, 27).

7. Plastic waste collection apparatus according to claim 6, wherein at least one waste collection area (17A, 17B) comprises a container (37) having a liquid - solid separator (39).

8. Lens manufacturing station (1) configured to shape a lens by material removal like machining, grinding, polishing and/or trimming, and comprising an interface to exchange data with a job database containing data information related to lenses (3) to be manufactured, said data information comprising for each lens manufacturing job at least a material type parameter of a lens to be shaped, further comprising a plastic waste collection apparatus (15) according to any of claims 1 to 7.

9. Lens manufacturing station according to claim 8, comprising a job execution space equipped with tools (7A, 7B) configured to shape a lens (3) by material removal like machining, grinding, polishing and/or trimming, further comprising
- at least a first evacuation section (18A) having a first end connected to the dispatching unit (31) and a second end outputting towards the first collection area (17A),
- at least a second evacuation section (18B) having a first end connected to the dispatching unit (31) and a second end outputting towards the second collection area (17B), the dispatching unit (31) being between the job execution space (5) and the first respective second evacuation section (18A, 18B).

10. Lens manufacturing station according to claim 9, wherein the first and second evacuation sections (18A, 18B) are located on opposite side of the job execution space (5).

11. Lens manufacturing station according to any of claims 8 to 10, where the first waste collection area (17A) is dedicated to receive thermoplastic waste and comprises a waste cleaning and/or drying unit (172 ; 174).

12. Lens manufacturing station according to claim 11, where further comprising a plastic pellets shaping unit (176) located downstream to the waste cleaning and/ or drying unit (172 ; 174).

13. Lens manufacturing station according to any of claims 1- 12, where in which the dispatching unit (31) is configured to dispatch a target composition to at least one collection area (17A), said target composition being composed of plastic waste material of a first and a second material type parameter.

14. Method for plastic waste collection generated by a lens manufacturing station (1), the lens manufacturing station being configured to shape a lens (3) by material removal like machining, grinding, polishing and/or trimming, and comprises an interface to exchange data with a job database containing data information related to lenses to be manufactured, said data information comprising for each lens manufacturing job at least a material type parameter of a lens to be shaped, wherein method comprises the following steps :
- reception of a material type parameter of a lens to be shaped,
- dispatching the generated waste depending on the received material type parameter towards a collection area (17A, 17B) for collecting waste according to said first material type parameter.

15. Method according to claim 14, further comprising a step of controlling at least one flap (21A, 21B) for dispatching the generated waste.

16. Method according to claim 14 or 15, further comprising a suction step for dispatching the generated waste.
